# EUROPÄISCHE PATENTSCHRIFT

(11) **EP 3 046 741 B1**
(45) Veröffentlichungstag und Bekanntmachung des Hinweises auf die Patenterteilung: **27.03.2019**
(21) Anmeldenummer: 14757886.8
(22) Anmeldetag: 21.08.2014
(51) Int. Cl.: B29C 33/12, B29C 70/86

(54) **VERFAHREN ZUR HERSTELLUNG EINES KUNSTSTOFFBAUTEILS**
METHOD FOR PRODUCING A PLASTIC COMPONENT
PROCÉDÉ POUR PRODUIRE UN ÉLÉMENT EN MATIÈRE PLASTIQUE

(30) Priorität: 18.09.2013 DE 102013218666
(43) Veröffentlichungstag der Anmeldung: 27.07.2016
(73) Patentinhaber: Bayerische Motoren Werke Aktiengesellschaft, 80809 München (DE)
(72) Erfinder: HAMMER, Maik, 84174 Eching (DE); KLEINKNECHT, Michael, 80335 München (DE); NIEKERK, Johann, 80993 München (DE); SCHNEIDEWIND, Thomas, 81543 München (DE)
(86) Internationale Anmeldenummer: PCT/EP2014/067805
(87) Internationale Veröffentlichungsnummer: WO 2015/039828

(56) Entgegenhaltungen:
- EP-A1- 1 048 442
- EP-A1- 1 508 429
- WO-A1-95/01863
- US-A1- 2003 129 377
- FERRET B ET AL: "Metal inserts in structural composite materials manufactured by RTM", COMPOSITES, IPC BUSINESS PRESS LTD. HAYWARDS HEATH, GB, Bd. 29, Nr. 5-6, 1. Januar 1998 (1998-01-01), Seiten 693-700, XP004120881, ISSN: 0010-4361, DOI: 10.1016/S1359-835X(97)00107-3

## Beschreibung

Die Erfindung betrifft ein Verfahren zur Herstellung eines faserverstärkten Kunststoffbauteils.

Im Automobilbereich werden häufig Metallbauteile durch faserverstärkte Kunststoffbauteile ersetzt. An diesen Kunststoffbauteilen sind Verbindungselemente für weitere Bauteile vorgesehen. Diese Verbindungselemente weisen beispielsweise einen Rastbolzen, ein Gewinde oder eine andere geeignete Haltegeometrie zur Befestigung weiterer Bauteile auf.

Bei den bisher verwendeten Metallbauteilen lassen sich solche Verbindungselemente einfach befestigen, beispielsweise durch Schweißen oder Löten. Die Anbringung dieser Verbindungselemente an Kunststoffbauteilen ist aber wesentlich aufwendiger. Das Verbindungselement kann beispielsweise auf das fertige Kunststoffbauteil aufgeklebt werden. Die Festigkeit dieser Klebeverbindung ist aber häufig nicht ausreichend. Eine weitere Möglichkeit ist die Herstellung einer formschlüssigen Verbindung, indem eine Bohrung in das Bauteil eingebracht und das Verbindungselement von einer Rückseite durch das Bauteil geführt wird, bis ein Flansch des Verbindungselements rückseitig am Bauteil anliegt. Dieses Verfahren führt aber zu einer Schwächung des Bauteils durch die Bohrung. Beide Verfahren erfordern zudem zusätzliche Arbeitsschritte.

Alternativ kann das Verbindungselement bei der Herstellung des Bauteils in dieses eingegossen werden. Für die Befestigung weiterer Bauteile ist allerdings eine exakte Positionierung des Verbindungselements am Kunststoffbauteil erforderlich. Das Verbindungselement muss also genau in der Form positioniert werden können. Zudem muss sichergestellt sein, dass sich das Verbindungselement während des Herstellungsprozesses nicht verschieben kann. Üblicherweise ist dazu in der Form eine Aufnahme vorgesehen, in die das Verbindungselement eingesetzt werden kann. Anschließend kann die Form mit einem Kunststoffmaterial gefüllt werden, wobei durch die Aufnahme ein Verschieben des Verbindungselements zuverlässig verhindert wird. Das flüssige Kunststoffmaterial kann aber in die Innen- oder Außengeometrie des Verbindungselements fließen und dort aushärten, sodass nach dem Aushärten des Kunststoffmaterials eine aufwendige Reinigung des aus dem Kunststoffbauteil ragenden Halteabschnitts des Verbindungselements erforderlich ist. Zudem kann das Lösen des Kunststoffbauteils aus der Form dadurch erschwert werden. Für verschiedene Verbindungselemente werden des Weiteren verschiedene Aufnahmen in der Form benötigt, um diese sicher fixieren zu können. Werden verschiedene Verbindungselemente verwendet, ist also jeweils ein aufwendiger Umbau der Form erforderlich.

In der US 2003 / 129 377 A1 und in dem Aufsatz von B. Ferret mit dem Titel "Metal inserts in structural composite materials manufactured by RTM" sind Verfahren zur Herstellung eines faserverstärkten Kunststoffbauteils mit Verbindungselementen gezeigt.

In der EP 1 508 429 A1, der EP 1 048 442 A1 und der WO 95 / 018 63 A1 sind verschiedene Verbindungselemente für faserverstärkte Kunststoffbauteile gezeigt.

Aufgabe der Erfindung ist es, ein Verfahren zur Herstellung eines insbesondere faserverstärkten Kunststoffbauteils bereitzustellen, das eine flexiblere Herstellung eines Kunststoffbauteils sowie einen schnelleren und effizienteren Herstellungsprozess ermöglicht.

Zur Lösung der Aufgabe ist ein Verfahren zur Herstellung eines insbesondere faserverstärkten Kunststoffbauteils mit einem insbesondere metallischen Verbindungselement vorgesehen, das einen im Kunststoffbauteil eingegossenen Verankerungsabschnitt sowie einen aus dem Kunststoffbauteil ragenden Halteabschnitt mit einer Haltegeometrie aufweist, wobei das Verfahren die folgenden Schritte aufweist:
- ein Schutzelement, das eine zur Außengeometrie des Halteabschnitts korrespondierende Innengeometrie aufweist, wird auf den Halteabschnitt des Verbindungselements aufgesetzt,
- das Schutzelement wird in einer Aufnahme in einer Form für das Kunststoffbauteil positioniert,
- die Form wird mit einem insbesondere faserverstärkten Kunststoffmaterial gefüllt, wobei der Verankerungsabschnitt vom Kunststoffmaterial umschlossen wird, und
- das Kunststoffbauteil wird aus der Form entnommen und das Schutzelement vom Halteabschnitt entfernt.

Das Schutzelement kann beispielsweise vor dem Aufsetzen auf den Halteabschnitt in der Aufnahme positioniert werden. Vorzugsweise wird das Schutzelement aber vor dem Positionieren in der Aufnahme auf den Halteabschnitt aufgesetzt und anschließend gemeinsam mit dem Verbindungselement in der Aufnahme positioniert. Dadurch ist zum einen ein Verformen des Schutzelements, beispielsweise bei aufwendigeren Haltegeometrien, möglich. Zum anderen kann so die korrekte Positionierung des Schutzelements auf dem Halteabschnitt überprüft werden. Darüber hinaus kann es nicht zu einer Beschädigung oder Verformung des Schutzelements beim Einsetzen des Halteabschnitts in das in der Aufnahme angeordnete Schutzelement kommen.

Bei einem faserverstärkten Kunststoff kann in einem ersten Verfahrensschritt das Schutzelement mit dem eingesetzten Verbindungselement in der Aufnahme bzw. der Form positioniert werden. Anschließend können Gewebelagen in die Form eingelegt, die Form geschlossen und mit einem flüssigen Kunststoffmaterial gefüllt werden. Um eine bessere Einbindung des Verbindungselements in den faserverstärkten Kunststoff zu erzielen, werden aber vorzugsweise vor dem Positionieren des Schutzelements und/oder des Verbindungselements in der Aufnahme Gewebelagen in die Form eingelegt, und das Schutzelement und/oder das Verbindungselement werden durch die Gewebelagen gedrückt. Dadurch kann sichergestellt werden, dass der Verankerungsabschnitt beidseitig von Gewebelagen umschlossen ist, sodass ein stabiler form- und stoffschlüssiger Verbund des Verbindungselements mit dem Kunststoffbauteil erfolgt. Bei diesem Verfahren ist es auch möglich, das Schutzelement vor dem Einlegen der Gewebelagen in die Aufnahme einzusetzen, anschließend die Gewebelagen in die Form zu legen und das Verbindungselement durch die Gewebelagen in das Schutzelement zu drücken. Je nach Form des Schutzelement und des Verbindungselements können in den Gewebelagen entsprechende Aussparungen vorgesehen sein oder das Material der Gewebelagen wird durch das Schutzelement oder das Verbindungselement verdrängt.

Weitere Vorteile und Merkmale finden sich in der nachfolgenden Beschreibung in Verbindung mit den beigefügten Zeichnungen. In diesen zeigen:
- Figur 1 ein Kunststoffbauteil,
- Figur 2 eine Baugruppe zur Herstellung des Kunststoffbauteils aus Figur 1, und
- Figuren 3a und 3d verschiedene Verfahrensschritte eines erfindungsgemäßen Verfahrens zur Herstellung des Kunststoffbauteils aus Figur 1 mit der Baugruppe aus Figur 2, und
- Figuren 4a und 4b verschiedene Verbindungselemente zur Verwendung in der Baugruppe aus Figur 2 mit dazu korrespondierenden Schutzelemente.

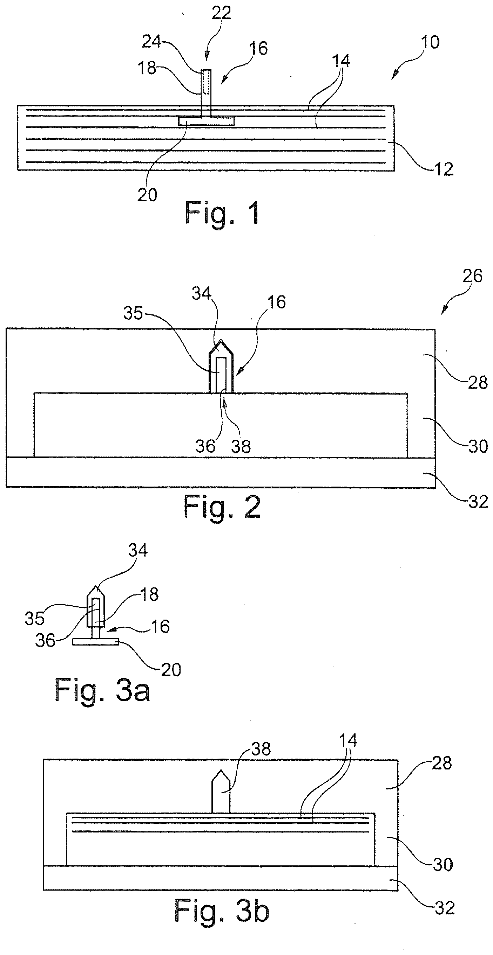

In Figur 1 ist ein faserverstärktes Kunststoffbauteil 10 mit einem Grundkörper 12 aus einem Kunststoffmaterial sowie mehreren, im Grundkörper 12 eingebetteten Gewebelagen 14 gezeigt. Das Kunststoffbauteil 10 weist des Weiteren ein Verbindungselement 16 auf, das einen Halteabschnitt 18 sowie einen Verankerungsabschnitt 20 aufweist, der einen gegenüber dem Halteabschnitt 18 vergrößerten Querschnitt aufweist und insbesondere tellerartig ausgebildet ist.

Der Verankerungsabschnitt 20 ist form- und stoffschlüssig in den Grundkörper 12 des Kunststoffbauteils 10 eingebettet. Insbesondere ist der Verankerungsabschnitt 20 eingegossen oder auf andere Weise stoff- und/oder formschlüssig mit dem Grundkörper verbunden, beispielsweise durch Umspritzen oder Umpressspritzen. Wie insbesondere in Figur 1 zu sehen ist, ist der Verankerungsabschnitt 20 zwischen den Gewebelagen 14 angeordnet, sodass eine zusätzliche Fixierung des Verankerungsabschnitts im Kunststoffbauteil 10 erfolgt.

In der hier gezeigten Ausführungsform besteht das Verbindungselement 16 aus einem metallischen Material. Es ist aber möglich, dass ein nicht-metallischer Werkstoff, beispielsweise Kunststoff, verwendet wird.

Der Halteabschnitt 18 ragt aus dem Grundkörper 12 heraus und weist eine zur Befestigung eines weiteren Bauteils geeignete Haltegeometrie 22 auf. In der hier gezeigten Ausführungsform ist die Haltegeometrie 22 durch ein Innengewinde 24 gebildet.

Eine Baugruppe 26 zur Herstellung eines solchen Kunststoffbauteils 10 ist in Figur 2 gezeigt. Die Baugruppe 26 hat eine Form 28, die im Wesentlichen das Kunststoffbauteil 10 abbildet und zwei Formteile 30, 32 aufweist. Des Weiteren weist die Baugruppe 26 ein Schutzelement 34 auf, das einen Aufnahmeraum 35 mit einer zur Außengeometrie des Halteabschnitts 18 korrespondierende Innengeometrie 36 aufweist. In der Form 28 ist des Weiteren eine Aufnahme 38 vorgesehen, in die das Schutzelement 34 bündig eingesetzt werden kann.

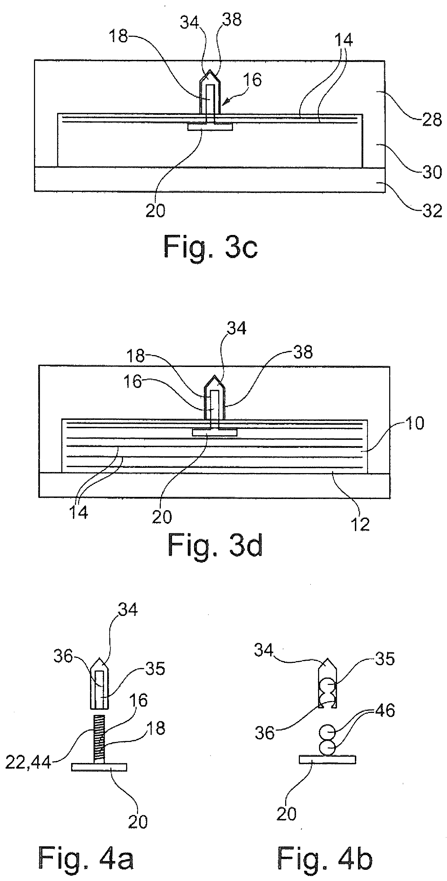

Zur Herstellung des in Figur 1 gezeigten Kunststoffbauteils 10 wird in einem ersten Herstellungsschritt (Figur 3a) das Schutzelement 34 auf den Halteabschnitt 18 des Verbindungselements 16 aufgesetzt. Anschließend wird das Schutzelement 34 mit dem in der Innengeometrie 36 aufgenommenen Verbindungselement 16 in die Aufnahme 38 eingesetzt. Durch das Schutzelement 34 ist das Verbindungselement 16 so in der gewünschten Position in der Form 28 sicher gehalten.

Das Schutzelement 34 ist beispielsweise aus einem flexiblen Kunststoff hergestellt, sodass sowohl eine Abdichtung zwischen Halteabschnitt 18 und Schutzelement 34 wie auch zwischen Schutzelement 34 und Aufnahme 38 bzw. der Form 28 erfolgt.

Anschließend werden einige Gewebelagen 14 in die Form 28 gelegt und das Schutzelement 34 mit dem Verbindungselement 16 durch die Gewebelagen 14 in die Aufnahme 38 gedrückt. In den Gewebelagen 14 können zur Aufnahme 38 korrespondierende Aussparungen vorgesehen sein. Es ist aber auch möglich, dass das Schutzelement 34 die Fasern der Gewebelagen 14 beim Eindrücken verdrängt.

Nach dem Einsetzen des Schutzelements 34 mit dem darin gehaltenen Verbindungselement 16 in die Aufnahme 38 werden weitere Gewebelagen 14 in die Form 28 gelegt und die geschlossene Form 28 mit einem flüssigen Kunststoffmaterial gefüllt. Nach dem Aushärten des Kunststoffmaterials wird das Kunststoffbauteil 10 mit dem darin eingegossenen Verbindungselement 16 aus der Form 28 entnommen.

Da das Schutzelement 34 sowohl zur Aufnahme 38 wie auch zum Halteabschnitt 18 hin abdichtet, kann das flüssige Kunststoffmaterial weder zwischen Schutzelement 34 und Aufnahme 38 noch zwischen das Schutzelement 34 und den Halteabschnitt 18 fließen und dort aushärten.

Dadurch ist zum einen eine einfache Entnahme des Kunststoffbauteils 10 mit dem Schutzelement 34 aus der Form 28 möglich. Anschließend kann das Schutzelement 34 einfach vom Halteabschnitt 18 entfernt werden. Durch die Abdichtung des Schutzelements 34 gegen den Halteabschnitt 18 kann zudem kein flüssiges Kunststoffmaterial an die Haltegeometrie 22 gelangen, sodass diese nach der Entnahme des Kunststoffbauteils 10 aus der Form 28 nicht gereinigt werden muss.

Durch das Schutzelement 34 erfolgt also eine genaue Positionierung des Verbindungselements 16 in der Form 28. Zudem wird der Halteabschnitt 18 des Verbindungselements 16, insbesondere die Haltegeometrie 22, zuverlässig vor einer Verschmutzung durch das flüssige Kunststoffmaterial geschützt.

Vorzugsweise weisen das Schutzelement 34 und die Aufnahme 38 eine standardisierte, korrespondierende Geometrie auf. Die Innengeometrie 36 des Schutzelements 34 kann dagegen an verschiedene Verbindungselemente 16 bzw. deren Halteabschnitt 18 und Haltegeometrie 22 angepasst sein. Durch die Wahl eines Schutzelements 34 mit einer zum Verbindungselement 16 passenden Innengeometrie 36 ist eine schnelle Anpassung der Baugruppe 26 an ein Kunststoffbauteil 10 mit einem gewünschten Verbindungselement 16 möglich.

Insbesondere ist es möglich, dass in der Form 28 mehrere, beispielsweise rasterförmig angelegte, Aufnahmen 38 vorgesehen sind. Je nach Anzahl und Anordnung der gewünschten Verbindungselemente 16 können mehrere Verbindungselemente 16 mit den zugehörigen Schutzelementen 34 in verschiedenen Aufnahmen 38 positioniert werden. Nicht benötigte Aufnahmen 38 können beispielsweise durch zusätzliche Schutzelemente 34 ohne eine Innengeometrie 36 oder Blindstopfen verschlossen werden.

In dem hier gezeigten Verfahren werden die Gewebelagen 14 teilweise vor dem Einsetzen des Schutzelements 34 in die Aufnahme 38 eingelegt. Auf diese Weise befindet sich der Verankerungsabschnitt 20 zwischen den Gewebelagen 14, wodurch eine bessere Anbindung des Verbindungselements 16 an das Kunststoffbauteil 10 möglich ist.

Es ist auch möglich, dass das Schutzelement 34 vor dem Einlegen der Gewebelagen 14 ohne Verbindungselement 16 in der Aufnahme 38 positioniert wird und anschließend die Gewebelagen 14 in die Form 28 eingelegt werden. Abschließend kann das Verbindungselement 16 durch die Gewebelagen 14 in das Schutzelement 34 geschoben werden.

Die Gewebelagen 14 können aber auch erst nach dem Einsetzen des Schutzelements 34 und des Verbindungselements 16 in die Aufnahme 38 in die Form 28 eingelegt werden.

Die Außengeometrie des Schutzelements 34 kann beliebig gewählt werden, wobei diese zur Geometrie der Aufnahme 38 korrespondierend ausgewählt sein sollte, um eine Abdichtung zur Aufnahme 38 hin sicherzustellen.

Das Schutzelement 34 kann beispielsweise rotationssymmetrisch ausgebildet sein, sodass dieses unabhängig von der Orientierung in der Aufnahme 38 positioniert werden kann.

Ist eine bestimmte Orientierung des Verbindungselements 16 im Kunststoffbauteil erwünscht, können die Aufnahme 38 und das Schutzelement aber auch einen anderen, beispielsweise einen eckige Querschnitt aufweisen, der ein Einsetzen des Schutzelements 34 ausschließlich in der gewünschten Orientierung ermöglicht.

Eine konisch zulaufende Spitze 40 erleichtert das Einsetzen und Positionieren in der Aufnahme 38. Wie in Figur 2 zu sehen ist, schließt das Schutzelement 34 bündig mit der Innenfläche 42 der Form 28 ab, sodass eine glatte Oberfläche des Kunststoffbauteils 10 entsteht und keine Nachbearbeitung der Oberfläche erforderlich ist.

Die Innengeometrie 36 des Schutzelements 34 kann beliebig an den jeweiligen Halteabschnitt 18 des Verbindungselements 16 angepasst werden. Es ist lediglich sicherzustellen, dass eine zuverlässige Abdichtung zwischen Schutzelement 34 und Halteabschnitt 18 erfolgt. Vorzugsweise erfolgt diese Abdichtung in einem an den Verankerungsabschnitt 20 anschließenden Abschnitt des Halteabschnitts 18. Das Schutzelement 34 kann auch nur in diesem Abschnitt am Verbindungselement 16 bzw. am Halterabschnitt 18 anliegen.

Weitere Formen eines Schutzelements 34 sowie der dazu korrespondierenden Verbindungselemente 16 sind in den Figuren 4a und 4b gezeigt.

In Figur 4a weist die Haltegeometrie 22 des Verbindungselements 16 ein Außengewinde 44 auf.

In Figur 4b weist der Halteabschnitt 18 dagegen mehrere kugelartige Elemente 46 auf.

Die Innengeometrie 36 der Schutzelemente 34 ist jeweils so ausgebildet, dass die Schutzelemente 34 formschlüssig auf die jeweiligen Halteabschnitte 18 aufgesetzt werden können.

## Patentansprüche

1. Verfahren zur Herstellung eines insbesondere faserverstärkten Kunststoffbauteils (10) mit einem insbesondere metallischen Verbindungselement (16), das einen im Kunststoffbauteil (10) eingegossenen Verankerungsabschnitt (20) sowie einen aus dem Kunststoffbauteil (10) ragenden Halteabschnitt (18) mit einer Haltegeometrie (22) aufweist, mit folgenden Schritten:
- Ein Schutzelement (34), das eine zur Außengeometrie des Halteabschnitts (18) korrespondierende Innengeometrie (36) aufweist, wird auf den Halteabschnitt (18) des Verbindungselements (16) aufgesetzt,
- Das Schutzelement (34) wird in einer Aufnahme (38) in einer Form (28) für das Kunststoffbauteil (10) positioniert,
- Die Form (28) wird mit einem insbesondere faserverstärkten Kunststoffmaterial gefüllt, wobei der Verankerungsabschnitt (20) vom Kunststoffmaterial umschlossen wird, und
- Das Kunststoffbauteil (10) wird aus der Form (28) entnommen und das Schutzelement (34) vom Halteabschnitt (18) entfernt.

2. Verfahren nach Anspruch 1, **dadurch gekennzeichnet, dass** das Schutzelement (34) vor dem Positionieren in der Aufnahme (38) auf den Halteabschnitt (18) aufgesetzt wird.

3. Verfahren nach Anspruch 1 oder 2, **dadurch gekennzeichnet, dass** vor dem Positionieren des Schutzelements (34) in der Aufnahme (38) Gewebelagen (14) in die Form (28) eingelegt werden und das Schutzelement (34) und/oder das Verbindungselement (16) durch die Gewebelagen (14) gedrückt wird.

## Claims

1. A method for producing an especially fibre-reinforced plastics-material component (10) with an especially metallic connecting element (16) which has an anchoring portion (20) cast into the plastics-material component (10) and also a holding portion (18), with a holding geometry (22), protruding from the plastics-material component (10), having the following steps:
- a protective element (34), which has an inner geometry (36) corresponding to the outer geometry of the holding portion (18), is placed on the holding portion (18) of the connecting element (16),
- the protective element (34) is positioned in a receptacle (38) in a mould (28) for the plastics-material component (10),
- the mould (28) is filled with an especially fibre-reinforced plastics material, wherein the anchoring portion (20) is enclosed by the plastics material, and
- the plastics-material component (10) is removed from the mould (28) and the protective element (34) is removed from the holding portion (18).

2. A method according to Claim 1, **characterised in that** the protective element (34) is placed on the holding portion (18) prior to the positioning in the receptacle (38).

3. A method according to Claim 1 or Claim 2, **characterised in that** prior to the positioning of the protective element (34) in the receptacle (38) layers of fabric (14) are laid in the mould (28) and the protective element (34) and/or the connecting element (16) is pressed through the layers of fabric (14).

## Revendications

1. Procédé d'obtention d'une pièce (10) en matériau synthétique en particulier renforcé par des fibres comprenant un élément de liaison (16) en particulier métallique qui comporte un segment d'ancrage (20) surmoulé dans la pièce (10) en matériau synthétique ainsi qu'un segment de maintien (18) dépassant de la pièce (10) en matériau synthétique ayant une géométrie de maintien (22) comportant les étapes suivantes consistant à :
- positionner sur le segment de maintien (18) de l'élément de liaison (16) un élément de protection (34) qui a une géométrie interne (36) correspondant à la géométrie externe de ce segment de maintien (18),
- positionner l'élément de protection (34) dans un logement (38) d'un moule (28) de la pièce (10) en matériau synthétique,
- remplir le moule (28) avec un matériau synthétique en particulier renforcé par des fibres, le segment d'ancrage (20) étant entouré de matériau synthétique, et
- extraire la pièce en matériau synthétique (10) du moule (28) et séparer l'élément de protection (34) du segment de maintien (18).

2. Procédé conforme à la revendication 1,
**caractérisé en ce que**
l'élément de protection (34) est positionné sur le segment de maintien (18) avant son positionnement dans le logement (38).

3. Procédé conforme à la revendication 1 ou 2,
**caractérisé en ce qu'**
avant le positionnement de l'élément de protection (34) dans le logement (38) des garnitures en tissu (14) sont insérées dans le moule (28) et l'élément de protection (34) et/ou l'élément de liaison (16) est(sont) comprimé(s) par les garnitures en tissu (14).
